# EUROPEAN PATENT APPLICATION

(11) **EP 2 275 185 A1**
(43) Date of publication of application: **19.01.2011**
(21) Application number: 09738794.8
(22) Date of filing: 27.04.2009
(51) Int. Cl.: B01D 39/14, B01D 39/20, B01D 46/00, B01D 69/10, B01D 71/02, F01N 3/02

(54) **EXHAUST GAS PURIFYING FILTER**

(30) Priority: 28.04.2008 JP 2008117815
(71) Applicant: Sumitomo Osaka Cement Co., Ltd., Tokyo 102-8465 (JP); Honda Motor Co., Ltd., Minato-ku Tokyo 107-8556 (JP)
(72) Inventor: TANAKA Shinichi, Tokyo 102-8465 (JP); TANAKA Masamichi, Tokyo 102-8465 (JP); NEYA Tadashi, Tokyo 102-8465 (JP); ISHIZAKI Keita, Wako-shi Saitama 351-0193 (JP); MONDORI Fumihiro, Wako-shi Saitama 351-0193 (JP)
(74) Representative: Vuillermoz, Bruno
(86) International application number: PCT/JP2009/058287
(87) International publication number: WO 2009/133857

(57) **Abstract**

Provided is an exhaust gas purifying filter which shortens the combustion time of the particulate matter that is deposited on the partition walls, during the regeneration of a ceramic honeycomb structure, while maintaining the efficiency of capturing the particulate matter and suppressing an increase in the pressure loss, thereby preventing the destruction of the ceramic honeycomb structure, and which can also reduce the fuel use that is required to increase the exhaust gas temperature and bring about an enhancement of the fuel efficiency. The exhaust gas purifying filter of the present invention includes a filter body (11) formed from a porous body having an inflow surface through which an exhaust gas containing particulate matter flows in, an emitting surface through which purified gas is emitted, and a number of fine pores, and the filter body (11) has a partition wall (14) and a number of gas flow channels (12) surrounded by the partition wall (14) and extended along the longitudinal direction thereof, and a porous membrane (13) containing at least silicon and carbon is provided on the inner wall surface (12a) of the gas flow channel (12).

## Description

### Technical Field

The present invention relates to an exhaust gas purifying filter for removing particulate matter from the exhaust gas emitted from automotive diesel engines and the like.
The present patent application claims priority on Japanese Patent Application No. 2008-117815 filed on April 28, 2008, the content of which is incorporated herein by reference.

### Background Art

The various materials contained in the exhaust gas that is emitted from automotive diesel engines are a cause of air pollution and have hitherto caused a variety of environmental problems. Particularly, the particulate matter (PM) contained in the exhaust gas is regarded as a source that triggers allergic symptoms such as asthma and allergy to pollen.
In general, automotive diesel engines use a plugged type honeycomb structure (diesel particulate filter, DPF) made of a ceramic material to capture particulate matter. This honeycomb structure has the two terminals of the cells (gas flow channels) of the ceramic honeycomb structure plugged in a checkerboard pattern, and when the exhaust gas passes through the fine pores of the partition walls of these cells, the particulate matter is captured (see, for example, Patent Documents 1 and 2).

[Patent Document 1] Japanese Unexamined Patent Application Publication No. H05-23512
[Patent Document 2] Japanese Unexamined Patent Application Publication No. H09-77573

### Disclosure of Invention

### Problems to be Solved by the Invention

However, when an automobile is running, particulate matter is always emitted from the engine, and thus the particulate matter is gradually accumulated in the cells of the honeycomb structure. When the particulate matter is deposited, the pressure loss in the honeycomb structure is increased, and therefore, it is required to regenerate the honeycomb structure by regularly removing the particulate matter by a certain method.
Thus, regeneration of the honeycomb structure is conventionally carried out by increasing the exhaust gas temperature when an increase in the pressure loss is recognized, and thereby combusting the particulate matter. However, in this regeneration method, the combustion time increases as the amount of the deposited particulate matter becomes larger, and thus the temperature at the time of combustion rises. Therefore, there have been instances where the honeycomb structure itself has been destroyed by the thermal stress generated thereby.

The present invention was made in view of such circumstances, and it is an object of the invention to provide an exhaust gas purifying filter which shortens the combustion time of the particulate matter that is deposited on the partition walls, during the regeneration of the ceramic honeycomb structure, while maintaining the efficiency of capturing the particulate matter and suppressing an increase in the pressure loss, thereby preventing the destruction of the ceramic honeycomb structure, and which can also reduce the fuel use that is required to increase the exhaust gas temperature and bring about an enhancement of the fuel efficiency.

### Means for Solving the Problems

The present inventors carried out a thorough investigation to solve the problems described above, and as a result, they found that when the partition walls of a ceramic honeycomb structure are provided with a porous membrane containing at least silicon and carbon and having a predetermined film thickness, average pore diameter and average porosity, the combustion time for the particulate matter that is deposited on the partition walls can be shortened during regeneration of the ceramic honeycomb structure, while maintaining the efficiency of capturing the particulate matter and suppressing an increase in the pressure loss in the ceramic honeycomb structure. Thus, the inventors completed the present invention.

That is, the exhaust gas purifying filter of the present invention is an exhaust gas purifying filter equipped with a filter body formed from a porous body having an inflow surface through which an exhaust gas containing particulate matter flows in, an emitting surface through which purified gas is emitted, and a number of fine pores, and the exhaust gas purifying filter is characterized in that the filter body has a partition wall and a number of gas flow channels surrounded by the partition wall and extended along the longitudinal direction thereof; a porous membrane containing at least silicon and carbon is provided on the inner wall surface of the gas flow channel; and the porous membrane constitutes an independent membrane on the inner wall surface without penetrating into the fine pores of the porous body which forms the filter body.

The thickness of the porous membrane is preferably 5 to 40 µm.
The average pore diameter of the porous membrane is preferably 50 to 500 nm.
The average porosity of the porous membrane is preferably 50% to 90%.

The porous membrane is preferably formed from silicon carbide, and the heat conductivity is preferably 1 W/m·K or greater.
The porous membrane is preferably formed from silicon carbide particles having an average primary particle diameter of 10 nm to 200 nm.
It is preferable that a particulate matter catalyst is supported on the porous membrane at the inner wall surface of the gas flow channel.
It is preferable that the porous membrane and a particulate matter catalyst film are laminated at the inner wall surface of the gas flow channel.

### Effects of the Invention

The exhaust gas purifying filter of the present invention is an exhaust gas purifying filter equipped with a filter body formed from a porous body having an inflow surface through which an exhaust gas containing particulate matter flows in, an emitting surface that emits purified gas, and a number of fine pores. The filter body has a partition wall and a number of gas flow channels surrounded by the partition wall and extended along the longitudinal direction thereof, and the inner wall surface of the gas flow channel is provided with a porous membrane which contains at least silicon and carbon. The particulate matter which is going to be captured is captured at the surface of the porous membrane without penetrating into the inside of the partition wall of the filter body, and thus clogging of the partition wall can be prevented. Consequently, an increase in the pressure loss can be suppressed. Furthermore, during regeneration of the filter body, heat exchange with the exhaust gas that passes through the porous membrane works effectively, and the particulate matter can be combusted and removed in a short amount of time.

### Brief Description of Drawings

FIG. 1 is a schematic perspective view showing a partial cross-section of an embodiment of the exhaust gas purifying filter of the present invention.
FIG. 2 is a schematic cross-sectional view showing the partition wall structure of the exhaust gas purifying filter shown in FIG. 1.
FIG. 3 is a scanning electron microscopic (SEM) image showing the cross-section of the partition wall and the porous membrane provided thereon of the exhaust gas purifying filter of the present invention.

### Embodiments for Carrying Out the Invention

The best mode of the exhaust gas purifying filter of the present invention will be described.
This mode is specifically explained in order to assist better understanding of the purport of the invention, and unless particularly stated otherwise, this mode is not intended to limit the present invention.

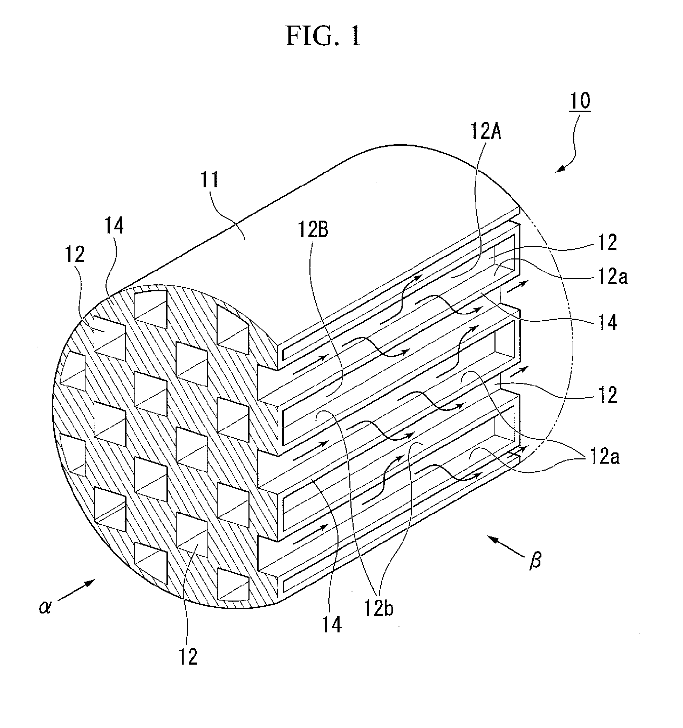

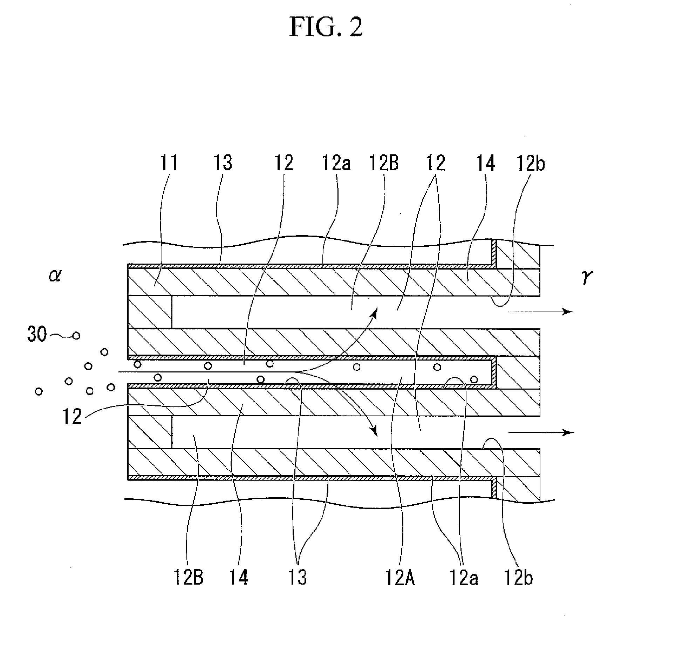

FIG. 1 is a schematic perspective view showing a partial cross-section of an embodiment of the exhaust gas purifying filter of the present invention. FIG. 2 is a schematic cross-sectional view showing the partition wall structure of the exhaust gas purifying filter shown in FIG. 1.
The exhaust gas purifying filter 10 of this embodiment is approximately constituted of a filter body 11 that has a cylindrically shaped external appearance and is formed of a porous ceramic material having a number of fine pores; gas flow channels 12; and porous membranes 13 provided on the inner wall surfaces 12a of the gas flow channels 12A (flow channels for inflow exhaust gas) among the gas flow channels 12, in which the ends on the upstream side of the exhaust are open.
FIG. 1 shows the cross-section that perpendicularly intersects with the axial direction of the cylinder (in FIG. 1, the surface indicated by symbol α) and the cross-section that is parallel with the axial direction of the cylinder (in FIG. 1, the surface indicated by symbol β).

The filter body 11 is approximately constituted of a partition wall 14, and a number of cell-like gas flow channels 12 surrounded by this partition wall 14 and extended along the longitudinal direction thereof (the direction of flow of the exhaust gas), and forms a honeycomb structure (lattice structure). Furthermore, the filter body 11 is such that among the two end surfaces that are perpendicular to the axial direction of the cylinder, one of the end surfaces constitutes an inflow surface through which an exhaust gas containing particulate matter flows in (for example, the surface indicated by the symbol α in FIG. 1), while the other end surface constitutes an outflow surface which emits purified gas (for example, the surface opposite to the surface indicated by the symbol α in FIG. 1).

Furthermore, the gas flow channel 12 forms a structure in which, when viewed from the direction of flow of the exhaust gas (longitudinal direction), the upstream side ends and the downstream side ends are alternately blocked. Furthermore, a number of fine pores (pores) are formed inside the partition wall 14 between gas flow channels 12, and for example, an exhaust gas entering the gas flow channel 12A (flow channel for inflow exhaust gas) having an open end on the upstream side of the exhaust passes through the fine pores of the partition wall 14 and is emitted through the gas flow channel 12B having an open end on the downstream side (outflow gas flow channel). There, the particulate matter is captured at the surface of the porous membrane without penetrating into the inside of the partition wall of the filter body.

Furthermore, FIG. 2 is a magnified view showing the surface indicated by the symbol β in FIG. 1, and is a diagram showing the flow of the exhaust gas flowing in through the inflow side (symbol α side in FIG. 1) of the exhaust gas purifying filter 10, and the purified gas that passes through the partition wall 14 and is purified and emitted through the outlet side (symbol γ side).
The exhaust gas containing particulate matter 30 that has entered from the inflow side passes through the partition wall 14 of the filter body 11 in the course of flowing through the gas flow channel 12A (flow channel for inflow exhaust gas) from the symbol α side to the symbol γ side in FIG. 2. At this time, the particulate matter 30 contained in the exhaust gas is removed by the surface of the porous membrane 13, and the purified gas from which the particulate matter 30 has been removed flows through the gas flow channel 12B (outflow gas flow channel) from the symbol α side to the symbol γ side and is finally emitted through the outlet.

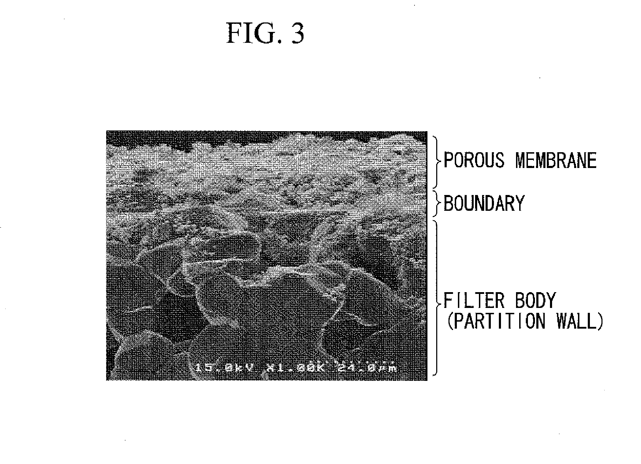

In the exhaust gas purifying filter 10, a porous membrane 13 containing at least silicon and carbon is provided on the inner wall surface 12a of the gas flow channel 12A (flow channel for inlet exhaust gas) having an open end on the upstream side of the exhaust. Here, the phrase "the porous membrane 13 contains at least silicon and carbon" means that the porous membrane 13 is formed from particles that contain at least silicon and carbon, or that the porous membrane 13 is formed from a composite of particles that contain at least silicon and carbon, and other particles.
This porous membrane 13 constitutes an independent membrane on the inner wall surface 12a of the gas flow channel 12, without penetrating into the fine pores of the porous body that forms the filter body 11. That is, as can also be seen from the scanning electron microscopic (SEM) image shown in FIG. 3, the porous membrane 13 is provided on the inner wall surface 12a of the gas flow channel 12, without the particles, containing at least silicon and carbon which form the porous membrane 13 penetrating into the inside of the partition wall 14 of the filter body 11 and blocking the pores contained in the partition wall 14.

The thickness of the porous membrane 13 is preferably 5 µm to 40 µm, and more preferably 8 µm to 30 µm.
A thickness of the porous membrane 13 of 5 µm to 40 µm is preferred because, if the thickness of the porous membrane 13 is less than 5 µm, the particulate matter is deposited inside the exhaust gas purifying filter 10 (on the porous membrane 13), and when a regeneration treatment is carried out by combusting this particulate matter, an enhancement in the efficiency of combustion of the particulate matter cannot be obtained. On the other hand, if the thickness of the porous membrane 13 is greater than 40 µm, when an exhaust gas containing particulate matter 30 flows into the exhaust gas purifying filter 10, the pressure loss is increased.

The porous membrane 13 has a large number of pores, and these pores are connected to each other so that the pores consequently form a filter-like porous material having through-holes.
The average pore diameter of the porous membrane 13 is preferably 50 nm to 500 nm, and more preferably 70 nm to 400 nm.
The average pore diameter of the porous membrane 13 is preferably 50 nm to 500 nm because, if the average pore diameter of the porous membrane 13 is less than 50 nm, when an exhaust gas containing particulate matter 30 flows into the exhaust gas purifying filter 10, the pressure loss is increased. On the other hand, if the average pore diameter of the porous membrane 13 is greater than 500 nm, when a regeneration treatment of the exhaust gas purifying filter 10 is carried out, an enhancement of the efficiency of combustion of the particulate matter cannot be obtained.

Furthermore, the ratio of the average pore diameter of the porous membrane 13 with respect to the average fine pore (pore) diameter of the partition wall 14 of the filter body 11, that is, (average pore diameter of porous membrane 13) / (average fine pore diameter of partition wall 14), is preferably 0.003 to 0.2, and more preferably 0.05 to 0.1.
It is preferable that the ratio (average pore diameter of porous membrane 13)/(average fine pore diameter of partition wall 14) is 0.003 to 0.2, because if this ratio is less than 0.003, when an exhaust gas containing particulate matter 30 flows into the exhaust gas purifying filter 10, the pressure loss is increased, and on the other hand, if this ratio exceeds 0.2, when a regeneration treatment of the exhaust gas purifying filter 10 is carried out, an enhancement in the efficiency of combustion of the particulate matter cannot be obtained.

The average porosity of the porous membrane is preferably 50% to 90%, and more preferably 60% to 85%.
It is preferable that the average porosity of the porous membrane is 50% to 90%, because if the average porosity of the porous membrane is less than 50%, when an exhaust gas containing particulate matter 30 flows into the exhaust gas purifying filter 10, the pressure loss is increased. On the other hand, if the average porosity of the porous membrane exceeds 90%, when a regeneration treatment of the exhaust gas purifying filter 10 is carried out, an enhancement in the efficiency of combustion of the particulate matter cannot be obtained.

Moreover, the ratio of the average porosity of the porous membrane 13 with respect to the average fine porosity (porosity) of the partition wall 14 of the filter body 11, that is, (average porosity of porous membrane 13)/(average fine porosity of partition wall 14), is preferably 1.2 to 2.5, and more preferably 1.3 to 2.2.
It is preferable that the ratio (average porosity of porous membrane 13)/(average fine porosity of partition wall 14) is 1.2 to 2.5, because if this ratio is less than 1.2, when an exhaust gas containing particulate matter 30 flows into the exhaust gas purifying filter 10, the pressure loss is increased, and on the other hand, if this ratio exceeds 2.5, when a regeneration treatment of the exhaust gas purifying filter 10 is carried out, an enhancement in the efficiency of combustion of the particulate matter cannot be obtained.

Such a porous membrane 13 is formed from particles containing at least silicon and carbon, or from a composite of particles containing at least silicon and carbon with other particles, and examples of these particles include silicon carbide (SiC) particles, as well as composites of SiC/TiC particles, SiC/WC particles, and SiC/MoC particles.
In the exhaust gas purifying filter 10, the porous membrane 13 formed of silicon carbide and a porous membrane having a heat conductivity of 1 W/m·K or greater is preferred, while a porous membrane having a heat conductivity of 3 W/m·K or greater is more preferred.
It is preferable that the porous membrane 13 is formed of silicon carbide and has a heat conductivity of 1 W/m·K or greater because, if the heat conductivity of the porous membrane 13 is less than 1 W/m·K, when a regeneration treatment of the exhaust gas purifying filter 10 is carried out, an enhancement in the efficiency of combustion of the particulate matter cannot be obtained.

Furthermore, the porous membrane 13 is preferably formed from silicon carbide particles having an average primary particle diameter of 10 nm to 200 nm, and more preferably formed from silicon carbide particles having an average primary particle diameter of 20 nm to 180 nm.
It is preferable that the porous membrane 13 is formed from silicon carbide particles having an average primary particle diameter of 10 nm to 200 nm, because if the average primary particle diameter of the silicon carbide particles is less than 10 nm, when an exhaust gas containing particulate matter 30 flows into the exhaust gas purifying filter 10, the pressure loss is increased, and on the other hand, if the average primary particle diameter of the silicon carbide particles exceeds 200 nm, when a regeneration treatment of the exhaust gas purifying filter 10 is carried out, an enhancement in the efficiency of combustion of the particulate matter cannot be obtained.

In this embodiment, an exhaust gas purifying filter 10 provided with a porous membrane 13 on the inner wall surface 12a of the gas flow channel 12, was taken as an example, but the exhaust gas purifying filter of the present invention is not limited to this. In the exhaust gas purifying filter of the present invention, a particulate matter catalyst which accelerates the degradation of the particulate matter, may be supported on the porous membrane in the inner wall surface of the gas flow channel.
In regard to the form of supporting, the porous membrane may be laminated with a particulate matter catalyst film that accelerates the degradation of the particulate matter. That is, a porous membrane may be provided on the inner wall surface of the inflow side of the gas flow channel, and a particulate matter catalyst film may be provided on this porous membrane. On the other hand, a particulate matter catalyst film may be provided on the inner wall surface of the inflow side of the gas flow channel, and a porous membrane may be provided on this particulate matter catalyst film. Alternatively, a particulate matter catalyst film may be provided on the inner wall surface of the gas flow channel, a porous membrane may be provided on this particulate matter catalyst film, and a particulate matter catalyst film may be further provided on this porous membrane. Furthermore, particulate matter may be laminated on or incorporated into the inner wall surface of the fine pores of the porous membrane 13.
Furthermore, a porous membrane which is a composite of particles containing at least a particulate matter catalyst and particles forming the porous membrane 13 may also be used.

Next, the method for producing an exhaust gas purifying filter 10 will be explained.
As the silicon carbide particles, such particles obtained by an Acheson method, a thermal plasma method, a silica precursor calcination method or the like are used.
These silicon carbide particles are dispersed in a dispersion medium to obtain a silicon carbide particle dispersion liquid.
This dispersion process is preferably carried out according to a wet method.
In regard to the dispersing machine used in this wet method, both an open type and a closed type can be used, and for example, a ball mill, a medium-stirring mill and the like are used. Examples of the ball mill include a tumbling ball mill, a vibrating ball mill, a planetary mill and the like. Examples of the medium-stirring mill include a tower-type mill, a stirring tank-type mill, a circulating tube-type mill, and a tube-shaped mill.

For the dispersion medium, basically, water or an organic solvent is suitably used, but in addition to those, a single polymer monomer or a single oligomer, or a mixture of such substances can be used.
Examples of the organic solvent include alcohols such as methanol, ethanol, propanol, diacetone alcohol, furfuryl alcohol, ethylene glycol, and hexylene glycol; esters such as acetic acid methyl ester and acetic acid ethyl ester; ether alcohols such as diethyl ether, ethylene glycol monomethyl ether (methylcellosolve), ethylene glycol monoethyl ether (ethylcellosolve), ethylene glycol monobutyl ether (butylcellosolve), diethylene glycol monomethyl ether and ethylene glycol monoethyl ether; ethers such as dioxane and tetrahydrofuran; ketones such as acetone, methyl ethyl ketone, acetylacetone and acetoacetic acid ester; acid amides such as N,N-dimethylformamide; and aromatic hydrocarbons such as toluene and xylene are suitably used. One or more kinds of these solvents can be used.

Examples of the polymer monomer that can be used include acrylic or methacrylic monomers such as methyl acrylate and methyl methacrylate; and epoxy-based monomers.
Examples of the oligomer that can be used include a urethane acrylate-based oligomer, an epoxy acrylate-based oligomer, and acrylate-based oligomer.
In order to increase the affinity of these silicon carbide nanoparticles and the dispersion medium, the silicon carbide nanoparticles may be subjected to surface modification. Examples of the surface modifying agent include 3-aminopropyltrimethoxysilane, 3-aminopropyltriethoxysilane, cysteamine, tetramethylammonium hydroxide, and aminoethanediol, but the surface modifying agent is not limited to these, and a surface modifying agent which has a functional group that adsorbs to the surface of the silicon carbide nanoparticles and a terminal group that has affinity with the dispersion medium, may be used.

A dispersant or a binder may be added to the silicon carbide particle dispersion liquid.
Examples of the dispersant or binder that can be used include a polycarboxylic acid ammonium salt, and organic polymers such as polyethylene glycol, polyvinyl alcohol, and polyvinylpyrrolidone.
Subsequently, a resin that has been previously dissolved in water or an organic solvent is added to the silicon carbide particle dispersion liquid, and the mixture is stirred and mixed, to thereby prepare a silicon carbide particle coating liquid.
The same organic solvents as those used for the silicon carbide particle dispersion liquid, are used.
Examples of the resin include water-soluble cellulose ether, nitrocellulose, gelatin, Welan gum, agar and acrylic resin.

Subsequently, the silicon carbide particle coating liquid is applied to the inner wall surface of the partition wall 14 of the filter body 11, that is, the inner wall surface 12a of the gas flow channel 12, to form a coating film, and this coating film is heat treated. Thereby, an exhaust gas purifying filter 10 provided with a porous membrane 13 on the inner wall surfaces 12a of the gas flow channels 12 of the filter body 11 is obtained.

As the method for coating the silicon carbide particle coating liquid, a bar coating method, a slip casting method, a dip coating method, and a conventional wet coating method of applying a coating liquid on the surface of an object to be treated, are used.

The heat treatment temperature of the coating film is preferably 300°C to 1700°C, and more preferably 600°C to 1500°C.
The heat treatment time is preferably 0.25 hours to 10 hours, and more preferably 0.5 hours to 5 hours.
The atmosphere for heat treatment is not particularly limited, but the heat treatment of the coating film can be carried out in a reducing atmosphere of hydrogen or carbon monoxide; in an inert atmosphere of nitrogen, argon, neon or xenon; or in an oxidizing atmosphere of oxygen or air.

### EXAMPLES

Hereinafter, the present invention will be more specifically described based on Examples and Comparative Examples, but the present invention is not intended to be limited to the following Examples.

### (Preparation of silicon carbide particle dispersion liquid)

### "Preparation Example 1"

20 g of silicon carbide particles (average primary particle diameter 30 nm, manufactured by Sumitomo Osaka Cement Co., Ltd.), 178 g of pure water, and as a dispersant, 2.0 g of an ammonium polycarboxylate-based dispersant (Celuna D305, manufactured by Chukyo Yushi Co., Ltd.) were mixed, and a dispersion processing of this liquid mixture was carried out using a ball mill. Thus, a silicon carbide particle dispersion liquid (I) was prepared. The solids concentration of the obtained dispersion liquid was 10% by mass.

### "Preparation Example 2"

20 g of silicon carbide particles (average primary particle diameter 80 nm, manufactured by Sumitomo Osaka Cement Co., Ltd.), 178 g of pure water, and as a dispersant, 2.0 g of an ammonium polycarboxylate-based dispersant (Celuna D305, manufactured by Chukyo Yushi Co., Ltd.) were mixed, and a dispersion processing of this liquid mixture was carried out using a ball mill. Thus, a silicon carbide particle dispersion liquid (II) was prepared. The solids concentration of the obtained dispersion liquid was 10% by mass.

### "Preparation Example 3"

20 g of silicon carbide particles (average primary particle diameter 700 nm, manufactured by Yakushima Denko Co., Ltd.), 178 g of pure water, and as a dispersant, 2.0 g of an ammonium polycarboxylate-based dispersant (Celuna D305, manufactured by Chukyo Yushi Co., Ltd.) were mixed, and a dispersion processing of this liquid mixture was carried out using a ball mill. Thus, a silicon carbide particle dispersion liquid (III) was prepared. The solids concentration of the obtained dispersion liquid was 10% by mass.

### "Preparation Example 4"

20 g of silicon carbide particles (average primary particle diameter 30 nm, manufactured by Sumitomo Osaka Cement Co., Ltd.), 178 g of methanol, and as a dispersant, 2.0 g of a polymeric dispersant (DA-703, Kusumoto Chemicals, Ltd.) were mixed, and a dispersion processing of this liquid mixture was carried out using a ball mill. Thus, a silicon carbide particle dispersion liquid (IV) was prepared. The solids concentration of the obtained dispersion liquid was 10% by mass.

### (Preparation of silicon carbide particle coating liquid)

### "Preparation Example 5"

20 g of a water-soluble cellulose ether that had been previously dissolved in water (trade name: Metolose, solids content: 10% by mass, manufactured by Shin-Etsu Chemical Co., Ltd.), was added to 80 g of the silicon carbide particle dispersion liquid (I), and the mixture was stirred and mixed. Thereby, a silicon carbide particle coating liquid A in which the solids content ratio (by mass) of silicon carbide particles:resin = 80:20, was prepared.

### "Preparation Example 6"

10 g of a water-soluble cellulose ether that had been previously dissolved in water (trade name: Metolose, solids content: 10% by mass, manufactured by Shin-Etsu Chemical Co., Ltd.), was added to 90 g of the silicon carbide particle dispersion liquid (I), and the mixture was stirred and mixed. Thereby, a silicon carbide particle coating liquid B1 in which the solids content ratio (by mass) of silicon carbide particles:resin = 90:10, was prepared.

### "Preparation Example 7"

25 g of a water-soluble cellulose ether that had been previously dissolved in water (trade name: Metolose, solids content: 10% by mass, manufactured by Shin-Etsu Chemical Co., Ltd.), was added to 75 g of the silicon carbide particle dispersion liquid (I), and the mixture was stirred and mixed. Thereby, a silicon carbide particle coating liquid B2 in which the solids content ratio (by mass) of silicon carbide particles:resin = 75:25, was prepared.

### "Preparation Example 8"

5 g of water-soluble cellulose ether that had been previously dissolved in water (trade name: Metolose, solids content: 10% by mass, manufactured by Shin-Etsu Chemical Co., Ltd.), was added to 95 g of the silicon carbide particle dispersion liquid (I), and the mixture was stirred and mixed. Thereby, a silicon carbide particle coating liquid B3 in which the solids content ratio (by mass) of silicon carbide particles:resin = 95:5, was prepared.

### "Preparation Example 9"

40 g of water-soluble cellulose ether that had been previously dissolved in water (trade name: Metolose, solids content: 10% by mass, manufactured by Shin-Etsu Chemical Co., Ltd.), was added to 60 g of the silicon carbide particle dispersion liquid (I), and the mixture was stirred and mixed. Thereby, a silicon carbide particle coating liquid B4 in which the solids content ratio (by mass) of silicon carbide particles:resin = 60:40, was prepared.

### "Preparation Example 10"

20 g of water-soluble cellulose ether that had been previously dissolved in water (trade name: Metolose, solids content: 10% by mass, manufactured by Shin-Etsu Chemical Co., Ltd.), was added to 80 g of the silicon carbide particle dispersion liquid (I), and a Y₂O₃ sol was added thereto in an amount of 0.08 g in terms of solids, and the mixture was stirred and mixed. Thereby, a silicon carbide particle coating liquid C in which the solids content ratio (by mass) of silicon carbide particles:resin = 80:20, was prepared.

### "Preparation Example 11"

20 g of water-soluble cellulose ether that had been previously dissolved in water (trade name: Metolose, solids content: 10% by mass, manufactured by Shin-Etsu Chemical Co., Ltd.), was added to 80 g of the silicon carbide particle dispersion liquid (II), and the mixture was stirred and mixed. Thereby, a silicon carbide particle coating liquid D1 in which the solids content ratio (by mass) of silicon carbide particles:resin = 80:20, was prepared.

### "Preparation Example 12"

20 g of water-soluble cellulose ether that had been previously dissolved in water (trade name: Metolose, solids content: 10% by mass, manufactured by Shin-Etsu Chemical Co., Ltd.), was added to 80 g of the silicon carbide particle dispersion liquid (III), and the mixture was stirred and mixed. Thereby, a silicon carbide particle coating liquid D2 in which the solids content ratio (by mass) of silicon carbide particles:resin = 80:20, was prepared.

### "Preparation Example 13"

20 g of nitrocellulose (solids content: 10% by mass) that had been previously dissolved in 2-propanol, was added to 80 g of the silicon carbide particle dispersion liquid (IV), and the mixture was stirred and mixed. Thereby, a silicon carbide particle coating liquid E in which the solids content ratio (by mass) of silicon carbide particles:resin = 80:20, was prepared.

### (Production of exhaust gas purifying filter)

### "Example 1"

A honeycomb filter made of silicon carbide (DPF, average pore diameter in the partition wall: 10 µm, average porosity: 42%) was immersed in the silicon carbide particle coating liquid A, and a coating film formed from the silicon carbide particle coating liquid A was formed on the inner wall surface of the partition wall of this honeycomb filter by dip coating.
Subsequently, the honeycomb filter having a coating film formed thereon was dried at 100°C for 5 minutes, and then dried at 150°C for 3 hours, to thereby completely evaporate moisture. The honeycomb filter was calcined at 1500°C for 2 hours in an argon atmosphere. Thus, an exhaust gas purifying filter of Example 1, in which a porous membrane is formed on the inner wall surface of the partition wall of the honeycomb filter, was obtained.

### "Example 2"

A honeycomb filter made of silicon carbide (DPF, average pore diameter in the partition wall: 10 µm, average porosity: 42%) was immersed in the silicon carbide particle coating liquid A, and a coating film formed from the silicon carbide particle coating liquid A was formed on the inner wall surface of the partition wall of this honeycomb filter by dip coating.
Subsequently, the honeycomb filter having a coating film formed thereon was dried at 100°C for 5 minutes.
These processes of dip coating and drying were repeated three times, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Example 2, in which a porous membrane is formed on the inner wall surface of the partition wall of the honeycomb filter, was obtained.

### "Example 3"

A honeycomb filter made of silicon carbide (DPF, average pore diameter in the partition wall: 10 µm, average porosity: 42%) was immersed in the silicon carbide particle coating liquid B1, and a coating film formed from the silicon carbide particle coating liquid B1 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Example 3, in which a porous membrane is formed on the inner wall surface of the partition wall of the honeycomb filter, was obtained.

### "Example 4"

A honeycomb filter made of silicon carbide (DPF, average pore diameter in the partition wall: 10 µm, average porosity: 42%) was immersed in the silicon carbide particle coating liquid B2, and a coating film formed from the silicon carbide particle coating liquid B2 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 3 hours in an argon atmosphere. Thus, an exhaust gas purifying filter of Example 4, in which a porous membrane is formed on the inner wall surface of the partition wall of the honeycomb filter, was obtained.

### "Example 5"

A honeycomb filter made of silicon carbide (DPF, average pore diameter in the partition wall: 10 µm, average porosity: 42%) was immersed in the silicon carbide particle coating liquid C, and a coating film formed from the silicon carbide particle coating liquid C was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Example 5, in which a porous membrane is formed on the inner wall surface of the partition wall of the honeycomb filter, was obtained.

### "Example 6"

A honeycomb filter made of silicon carbide (DPF, average pore diameter in the partition wall: 10 µm, average porosity: 42%) was immersed in the silicon carbide particle coating liquid D1, and a coating film formed from the silicon carbide particle coating liquid D1 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 3 hours in an argon atmosphere. Thus, an exhaust gas purifying filter of Example 6, in which a porous membrane is formed on the inner wall surface of the partition wall of the honeycomb filter, was obtained.

### "Example 7"

A honeycomb filter made of cordierite (DPF, average pore diameter in the partition wall: 20 µm, average porosity: 60%) was immersed in the silicon carbide particle coating liquid A, and a coating film formed from the silicon carbide particle coating liquid A was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 800°C for 2 hours in an argon atmosphere. Thus, an exhaust gas purifying filter of Example 7, in which a porous membrane is formed on the inner wall surface of the partition wall of the honeycomb filter, was obtained.

### "Example 8"

A honeycomb filter made of silicon carbide (DPF, average pore diameter in the partition wall: 10 µm, average porosity: 42%) was immersed in the silicon carbide particle coating liquid E, and a coating film formed from the silicon carbide particle coating liquid E was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 100°C for 3 hours, to thereby completely evaporate organic solvent. The honeycomb filter was calcined at 1500°C for 2 hours in an argon atmosphere. Thus, an exhaust gas purifying filter of Example 8, in which a porous membrane is formed on the inner wall surface of the partition wall of the honeycomb filter, was obtained.

### "Comparative Example 1"

Pure water was added to the silicon carbide particle coating liquid A, and thus the solids concentration in the silicon carbide particle coating liquid A was halved. A honeycomb filter made of silicon carbide (DPF, average pore diameter in the partition wall: 10 µm, average porosity: 42%) was immersed in the coating liquid (A') obtained after adjustment, and a coating film formed from the silicon carbide particle coating liquid A' was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Comparative Example 1, in which a porous membrane is formed on the inner wall surface of the partition wall of the honeycomb filter, was obtained.

### "Comparative Example 2"

A honeycomb filter made of silicon carbide (DPF, average pore diameter in the partition wall: 10 µm, average porosity: 42%) was immersed in the silicon carbide particle coating liquid A, and a coating film formed from the silicon carbide particle coating liquid A was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Comparative Example 2, in which a porous membrane is formed on the inner wall surface of the partition wall of the honeycomb filter, was obtained.

### "Comparative Example 3"

A honeycomb filter made of silicon carbide (DPF, average pore diameter in the partition wall: 10 µm, average porosity: 42%) was immersed in the silicon carbide particle coating liquid B3, and a coating film formed from the silicon carbide particle coating liquid B3 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Comparative Example 3, in which a porous membrane is formed on the inner wall surface of the partition wall of the honeycomb filter, was obtained.

### "Comparative Example 4"

A honeycomb filter made of silicon carbide (DPF, average pore diameter in the partition wall: 10 µm, average porosity: 42%) was immersed in the silicon carbide particle coating liquid B4, and a coating film formed from the silicon carbide particle coating liquid B4 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Comparative Example 4, in which a porous membrane is formed on the inner wall surface of the partition wall of the honeycomb filter, was obtained.

### "Comparative Example 5"

A honeycomb filter made of silicon carbide (DPF, average pore diameter in the partition wall: 10 µm, average porosity: 42%) was immersed in the silicon carbide particle coating liquid D2, and a coating film formed from the silicon carbide particle coating liquid D2 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 1500°C for 2 hours in an argon atmosphere. Thus, an exhaust gas purifying filter of Comparative Example 5, in which a porous membrane is formed on the inner wall surface of the partition wall of the honeycomb filter, was obtained.

### "Comparative Example 6"

A honeycomb filter made of cordierite (DPF, average pore diameter in the partition wall: 20 µm, average porosity: 60%) was immersed in the silicon carbide particle coating liquid B1, and a coating film formed from the silicon carbide particle coating liquid B1 was formed on the inner wall surface of the partition wall of this honeycomb filter by dip coating.
Subsequently, the honeycomb filter having a coating film formed thereon was dried at 100°C for 5 minutes.
These processes of dip coating and drying were repeated twice, and then the honeycomb filter was dried at 150°C for 3 hours, to thereby completely evaporate moisture. The honeycomb filter was calcined at 800°C for 2 hours in an argon atmosphere. Thus, an exhaust gas purifying filter of Comparative Example 6, in which a porous membrane is formed on the inner wall surface of the partition wall of the honeycomb filter, was obtained.

### (Property evaluation of exhaust gas purifying filter)

The exhaust gas purifying filters obtained in Examples 1 to 8 and Comparative Example 1 to 6 were subjected to measurement of the film thickness, average pore diameter and average porosity of the porous membrane, measurement of heat conductivity, a pressure loss test, and a combustion test, by the methods described below.

### (1) Film Thickness of porous membrane

An electron microscopic image of the porous membrane of the exhaust gas purifying filter was obtained using a scanning electron microscope (SEM), and the thickness of the porous membrane was measured.
The results are shown in Table 1.

### (2) Average pore diameter and average porosity of porous membrane

The average pore diameter and average porosity of the porous membrane of the exhaust gas purifying filter were measured using a mercury porosimeter apparatus (AutoPore IV9500, manufactured by Shimadzu Corp.).
The results are shown in Table 1.

### (3) Heat conductivity of porous membrane

The inner wall of a honeycomb filter equipped with the porous membrane thus produced was cut to a size of 1 mm x 3 mm, and the measurement of heat conductivity was carried out by a light heating thermoreflectance method.
Since the measurement was difficult, the measurement was carried out with a representative sample only.

### (4) Pressure loss test

Dry air was allowed in through the inlet of the exhaust gas purifying filter at a flow rate of 100 L/min, and this dry air was passed through the partition wall of the exhaust gas purifying filter and emitted through the outlet. The pressure loss at the inlet in this instance was measured.
A honeycomb filter made of silicon carbide which was not provided with a porous membrane on the inner wall surface (untreated honeycomb filter) was taken as a reference, and when the ratio (pressure loss of exhaust gas purifying filter of Examples 1 to 8 and Comparative Examples 1 to 6)/(pressure loss of untreated honeycomb filter) ≤ 1.10, the honeycomb filter was rated as good.
The results are shown in Table 1.

### (5) Combustion test

Each of the exhaust gas purifying filters was installed in a diesel engine having an engine displacement of 2.2 L, and was operated at a speed of engine rotation of 1500 rpm. Thus, particulate matter was deposited inside the exhaust gas purifying filter.
The exhaust gas purifying filter having particulate matter deposited therein was heated to 600°C in a nitrogen atmosphere, and then 15% oxygen was introduced so that combustion of the particulate matter was continued. The time taken until the residual amount reached 10% was measured, and thereby the combustibility of the particulate matter was determined.
A honeycomb filter made of silicon carbide which was not provided with a porous membrane on the inner wall surface (untreated honeycomb filter) was taken as a reference, and when the time was shortened by 15% or more for the exhaust gas purifying filters of Examples 1 to 8 and Comparative Examples 1 to 6, the exhaust gas purifying filter was considered effective.
The results are shown in Table 1.

**[Table 1]**

| | Film thickness (µm) | Average pore size (nm) | Average porosity (%) | Average porosity of porous membrane/Average porosity of partition wall of honeycomb filter | Pressure loss test | Heat conductivity (W/m·K) | Combustion test |
|---|---|---|---|---|---|---|---|
| Example 1 | 5 | 100 | 83 | - | 1.02 | - | 21% |
| Example 2 | 38 | 100 | 80 | - | 1.08 | 2 | 28% |
| Example 3 | 21 | 101 | 60 | - | 1.09 | 20 | 27% |
| Example 4 | 20 | 103 | 87 | - | 1.04 | 1 | 25% |
| Example 5 | 22 | 60 | 80 | - | 1.09 | - | 25% |
| Example 6 | 21 | 420 | 83 | - | 1.01 | - | 21% |
| Example 7 | 20 | 102 | 83 | 1.38 | 1.02 | - | 22% |
| Example 8 | 20 | 102 | 83 | - | 1.02 | - | 23% |
| Comparative example 1 | 3 | 130 | 85 | - | 1.01 | - | No effect |
| Comparative example 2 | 62 | 62 | 70 | - | 1.7 | - | - |
| Comparative example 3 | 22 | 80 | 47 | - | 1.8 | - | - |
| Comparative example 4 | 20 | 500 | 92 | - | 1.01 | 0.5 | No effect |
| Comparative example 5 | 21 | 1100 | 60 | - | 1.01 | - | No effect |
| Comparative example 6 | 21 | 102 | 70 | 1.17 | 1.6 | - | - |

From the results of Table 1, it was found that in Examples 1 to 8, the honeycomb filters were excellent in the pressure loss and the combustibility of the particulate matter.
In Comparative Example 1, since the thickness of the porous membrane was 3 µm, it was found that the honeycomb filter had no effect on the combustibility of the particulate matter.
In Comparative Example 2, since the thickness of the porous membrane was 62 µm, it was found that the honeycomb filter had a large pressure loss.
In Comparative Example 3, since the average porosity of the porous membrane was 47%, it was found that the honeycomb filter had a large pressure loss.
In Comparative Example 4, since the average porosity of the porous membrane was 92% and the heat conductivity was 0.5 (W/m·K), it was found that the honeycomb filter had no effect on the combustibility of the particulate matter.
In Comparative Example 5, since the average pore diameter of the porous membrane was 1100 nm, it was found that the honeycomb filter had no effect on the combustibility of the particulate matter.
In Comparative Example 6, since the ratio (average porosity of porous membrane)/(average porosity of partition wall of honeycomb filter) =1.17, it was found that the honeycomb filter had a large pressure loss.

### Industrial Applicability

The exhaust gas purifying filter of the present invention is equipped with a filter body formed from a porous body having an inflow surface through which an exhaust gas containing particulate matter flows in, an emitting surface through which purified gas is emitted, and a number of fine pores. The filter body has a partition wall and a number of gas flow channels surrounded by the partition wall and extended along the longitudinal direction thereof, and the inner wall surface of the gas flow channel is provided with a porous membrane which contains at least silicon and carbon. The particulate matter which is going to be captured is captured at the surface of the porous membrane without penetrating into the inside of the partition wall of the filter body, and thus clogging of the partition wall can be prevented. Consequently, an increase in the pressure loss can be suppressed. Furthermore, during regeneration of the filter body, heat exchange with the exhaust gas that passes through the porous membrane works effectively, and the particulate matter can be combusted and removed in a short amount of time. From these reasons, the exhaust gas purifying filter of the present invention is industrially very useful.

### Explanation of Reference

- 10: Exhaust gas purifying filter
- 11: Filter body
- 12: Gas flow channel
- 12A: Inflow gas flow channel
- 12a: Inner wall of inflow gas flow channel
- 12B: Outflow gas flow channel
- 12b: Wall surface of outflow gas flow channel
- 13: Porous membrane
- 14: Partition wall
- 30: Particulate matter

## Claims

1. An exhaust gas purifying filter equipped with a filter body formed from a porous body having an inflow surface through which an exhaust gas containing particulate matter flows in, an emitting surface through which purified gas is emitted, and a number of fine pores,
wherein the filter body has a partition wall and a number of gas flow channels surrounded by the partition wall and extended along the longitudinal direction thereof, a porous membrane containing at least silicon and carbon is provided on the inner wall surface of the gas flow channel, and the porous membrane forms an independent membrane on the inner wall surface without penetrating into the fine pores of the porous body which forms the filter body.

2. The exhaust gas purifying filter according to claim 1, wherein the thickness of the porous membrane is 5 µm to 40 µm.

3. The exhaust gas purifying filter according to claim 1 or 2, wherein the average pore diameter of the porous membrane is 50 nm to 500 nm.

4. The exhaust gas purifying filter according to any one of claims 1 to 3, wherein the average porosity of the porous membrane is 50% to 90%.

5. The exhaust gas purifying filter according to any one of claims 1 to 4, wherein the porous membrane is formed of silicon carbide and has a heat conductivity of 1 W/m·K or greater.

6. The exhaust gas purifying filter according to any one of claims 1 to 5, wherein the porous membrane is formed from silicon carbide particles having an average primary particle diameter of 10 nm to 200 nm.

7. The exhaust gas purifying filter according to any one of claims 1 to 6, wherein a particulate matter catalyst is supported on the porous membrane at the inner wall surface of the gas flow channel.

8. The exhaust gas purifying filter according to claim 7, wherein a particulate matter catalyst film is laminated on the porous membrane at the inner wall surface of the gas flow channel.
